# EUROPÄISCHE PATENTSCHRIFT

(11) **EP 0 617 770 B1**
(45) Veröffentlichungstag und Bekanntmachung des Hinweises auf die Patenterteilung: **25.03.1998**
(21) Anmeldenummer: 93924552.8
(22) Anmeldetag: 29.10.1993
(51) Int. Cl.: F16F 1/36

(54) **RINGKERNFEDER**
TOROIDAL CORE SPRING
RESSORT A NOYAU TOROIDAL

(30) Priorität: 29.10.1992 DE 4236639
(43) Veröffentlichungstag der Anmeldung: 05.10.1994
(73) Patentinhaber: WOCO Franz-Josef Wolf & Co., D-63628 Bad Soden-Salmünster (DE)
(72) Erfinder: WOLF, Franz, Josef, D-63628 Bad Soden-Salmünster (DE); MOHR, Martin, D-63636 Brachttal-Udenhain (DE); HEIDENREICH, Lothar, D-36396 Steinau-Ulmbach (DE)
(74) Vertreter: Jaeger, Klaus, Dr.
(86) Internationale Anmeldenummer: EP9303026
(87) Internationale Veröffentlichungsnummer: WO9410475

(56) Entgegenhaltungen:
- CH-A- 645 959
- DE-A- 3 739 638
- DE-B- 1 261 703
- DE-U- 1 784 504
- DE-U- 1 901 591
- DE-U- 1 996 769

## Beschreibung

Die Erfindung betrifft die Verwendung einer Ringkernfeder aus Gummi.

Eine "Ringkernfeder" im Sinne der Erfindung ist eine prismatische, meist zylindrische und meist auf Druck belastete Gummifeder mit einer in der Regel beidseitig offenen zentralen Bohrung. Im eingebauten Anwendungsfall ist diese Bohrung üblicherweise von einer Koppelstange oder einer Führungsstange oder einem Bolzen mit Führungs- und/oder Koppel funktionen durchsetzt.

Ringkernfedern dieser Art weisen meist zylindrische Mantelflächen auf, die häufig auch Oberflächenstrukturen aufweisen, beispielsweise konvexe Noppen oder Rippen als Abstandshalter oder eine Ringnut zur Fixierung einer solchen Ringkernfeder durch Einknüpfen in eine Montageblechöffnung.

Ringkernfedern dieser Art, wie sie beispielsweise aus der deutschen Offenlegungsschrift DE 37 39 638 Al bekannt sind, dienen insbesondere zur Lagerung von dynamisch beanspruchten Bauteilen und dienen speziell im Kraftfahrzeugbau der Lagerung von Motoren und Aggregaten.

Diese bekannte Ringkernfeder ist bereits teilweise eingeschnürt. Über die ganze axiale Höhe eingeschnürte Ringkernfedern sind an sich aus CH-A-645959 bekannt.

Insbesondere im Kraftfahrzeugbau müssen solche Lagerfedern die auf ihnen gelagerten und meist dynamisch belasteten Bauteile jedoch nicht nur federnd lagern, sondern zwischen Auflager und Widerlager auch eine größtmögliche akustische Entkopplung aufbringen. Gummi als Werkstoff für solche Lagerfedern, speziell auch für die hier in Rede stehenden Ringkernfedern, ist daher mit seiner guten generellen Dämmwirkung für diesen Einsatzbereich besonders geeignet. Dabei ist die Dämmwirkung eines solchen Gummifeder-Masse-Systems frequenzabhängig. Gebräuchliche einfachisolierende Gummilager zeigen im Frequenzbereich von 0 bis ungefähr 300 Hz eine Zunahme der Dämmwirkung um bis zu 40 dB/Frequenzdekade.

Bei Kraftfahrzeugen, insbesondere bei Personenkraftfahrzeugen und leichteren Transportfahrzeugen, treten jedoch ab und oberhalb von ungefähr 300 Hz Belastungsfrequenz bei den Aggregatelagern auf Gummifederbasis Lager-Eigenresonanzen auf, und zwar im Gummiwerkstoff der Federn und Federkerne, was in der Frequenzkennlinie der Dämmwirkung zum Zusammenbruch der Dämmwirkung führt. Dieser Bereich liegt jedoch noch voll im Bereich der als "Rauhigkeit" bezeichneten akustischen Störschwingungen, wobei die Rauhigkeit je nach Fahrzeugtyp und Motortyp für übliche Vierzylindermotoren zwischen den Grenzen 200 Hz und 700 Hz, insbesondere im Bereich um 400 Hz, auftritt.

Ausgehend von diesem Stand der Technik liegt der Erfindung die Aufgabe zugrunde, einen Gummifederkörper, speziell einen Ringkernfederkörper, insbesondere für den Bau von Motorlagern und Aggregatelagern für die Kraftfahrzeugtechnik zu schaffen, der im Bereich der Rauhigkeit solcher Lager, insbesondere also im Frequenzbereich um und über 300 Hz bis um und unter 600 bis 700 Hz ein verbessertes Dämmverhalten als die bekannten Gummifederkerne zeigt.

Gelöst wird diese Aufgabe bei einer Ringkernfeder der im Oberbegriff des Patentanspruchs 1 genannten Art dadurch, daß im Mantel der Ringkernfeder ein Einschnürungsabschnitt ausgebildet ist, auf dessen axialer Höhe die Ringkernfeder verminderte Durchmesser in der Radialebene aufweist, wobei es sich bei einem solcherart ausgebildeten Einschnürungsabschnitt nicht lediglich um eine Ringnut oder Rille, beispielsweise zum Einspannen in eine Montageöffnung, sondern um einen Abschnitt mit ausgeprägter axialer Erstreckung handelt, der zur Erzielung einer ausreichenden Verbesserung der Dämmwirkung im Frequenzbereich der Rauhigkeit gleich oder größer als 30% der Gesamthöhe des Federkerns ist.

Überraschenderweise wird durch die Ausbildung eines solchen Einschnürungsabschnittes im Mantel von Ringkernfedern aus Gummi eine deutliche Verschiebung der Resonanzfrequenz der Lager zu höheren Frequenzen hervorgerufen, ohne daß dadurch die anderen Lagereigenschaften negativ beeinflußt werden. So kann beispielsweise für eine zylindrische Ringkernfeder mit einer Resonanz bei 300 Hz mit einem anschließenden Abfall der Dämmwirkung auf 50 bis 80% der maximalen Dämmwirkung eine Verschiebung der Resonanzfequenz auf 550 Hz und nahezu eine Verdreifachung der Dämmwirkung der Ringkernfeder dadurch erreicht werden, daß der Mantel der Ringkernfeder nicht zylindrisch, sondern als Hyperboloidfläche mit einer axialen Höhe von etwas über 90% der Gesamthöhe der Ringkernfeder bei einem kleinsten Durchmesser in der Radialebene ausgebildet ist, der um 30 bis 40% kleiner als der Durchmesser der Widerlageranschlußfläche und der Auflageranschlußfläche ist.

Um eine ausreichende Verschiebung der Resonanzfrequenz in zumindest weniger kritische Bereiche und eine merkliche Verbesserung des Dämmverhaltens zu erzielen, sollte die axiale Höhe des Einschnürungsabschnittes zumindest gleich oder größer 30% der Gesamthöhe des Federkerns sein. Vorzugsweise ist die axiale Höhe des Einschnürungsabschnittes gleich oder größer als die halbe Gesamthöhe, insbesondere zumindest im wesentlichen gleich der Gesamthöhe des Federkerns. Dabei kann das Axialprofil des Einschnürungsabschnittes winklig ausgebildet sein, ist jedoch vorzugsweise stetig verlaufend in der Weise ausgebildet, daß die die Mantelfläche des Einschnürungsabschnittes bildende Raumfläche konkav toroid, paraboloid oder hyperboloid konfiguriert ist.

Vorzugsweise liegt der kleinste Durchmesser des Einschnürungsabschnittes zumindest im wesentlichen auf oder im Bereich der halben axialen Gesamthöhe des Federkerns. Dies ist jedoch nicht zwingend notwendig, so daß bei anwendungsbedingt spezieller Gesamtgestaltung des Federkerns oder seiner Anschlüsse der kleinste Durchmesser des Einschnürungsabschnittes auch außermittig liegen kann.

Wesentlich zur Erzielung der Wirkung der Erfindung ist, daß der Ringkernfederkörper aus einem elastomeren Werkstoff, insbesondere Gummi, besteht. Überdies muß der Gummiwerkstoff der Ringkernfeder mechanisch ausreichend fest sein, um für die praktische Anwendung im Kraftfahrzeugbereich den statischen und dynamischen Belastungen einer Motorlagerung oder Aggregatelagerung standhalten zu können. Innerhalb dieses konstruktiven Rahmens kann der Ringkernfederkörper jedoch sowohl als Vollmaterial als auch, vorzugsweise, als sogenannter Lochgummikörper ausgebildet sein, speziell mit Hohlkanälen in axialer oder radialer Richtung durchsetzt sein, die symmetrisch über den Gesamtkörper verteilte Hohlräume, vorzugsweise kugelförmige Hohlräume, durchsetzen.

Die Erfindung ist im folgenden anhand eines Ausführungsbeispiels in Verbindung mit den Zeichnungen näher erläutert. Es zeigen:
- Fig. 1: die Frequenzabhängigkeit der dynamischen Federsteifigkeit für ein Ringkernlager nach dem Stand der Technik (I) und für ein Lager mit einem Ringkern mit den Merkmalen der Erfindung (II); und
- Fig. 2: eine Ringkernfeder mit den Merkmalen der Erfindung.

In der Fig. 2 ist ein Ausführungsbeispiel der Erfindung gezeigt. Die im großen und ganzen zumindest im wesentlichen zylindrische Ringkernfeder 1 besteht aus einem gummielastischen Werkstoff. Koaxial zur Rotationssymmetrieachse 2 weist der Federkörper 3 eine durchgehende zentrale Bohrung 4 auf, durch die im eingebauten Zustand der Ringkernfeder axial verschiebbar ein Koppelbolzen hindurchgreift. Über die kreisringförmige Stirnseitenfläche 5 ist vollflächig ein Auflageranschlußstück (in der Fig. nicht dargestellt) stoffschlüssig angebunden, während an der gegenüberliegenden, ebenfalls kreisringförmigen Stirnseitenfläche 6 ebenfalls stoffschlüssig und vollflächig ein Widerlageranschlußstück (in der Fig. ebenfalls nicht dargestellt) angebunden ist.

In der Zylindermantelfläche 7 des zumindest im wesentlichen zylindrischen Ringkernfederkörpers 3 ist auf einer axialen Höhe von rund 80% der Gesamthöhe des Ringkernfederkörpers 3 ein Einschnürungsabschnitt 8 ausgebildet. Die Mantelfläche 9 ist im Bereich des Einschnürungsabschnittes 8 als konkave Torusteilfläche, im Axialprofil also kreisbogenförmig, ausgebildet.

Der Ringkernfederkörper 3 ist in einer in der Fig. 2 nicht näher dargestellten Weise als Lochgummikörper ausgebildet, der mit in Schichten übereinanderliegenden radial verlaufenden Hohlkanälen durchsetzt ist, die ihrerseits im Ringkernfederkörper regelmäßig verteilte kugelförmige Hohlkanäle durchsetzen. Lochgummifederkörper dieser Art sind an sich ausreichend bekannt, so beispielsweise aus der deutschen Offenlegungsschrift DE 35 35 897 Al, und bedürfen daher an dieser Stelle keiner näheren Erläuterung.

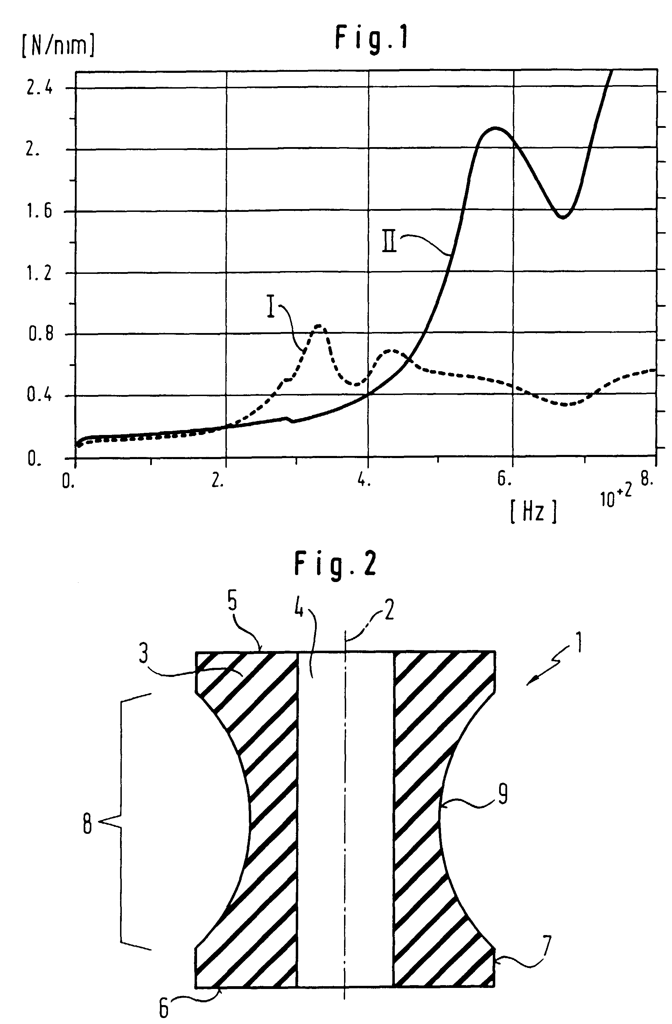

In der Fig. 1 ist mit der dynamischen Federsteifigkeit in N/mm als Maß für die Dämmwirkung die Dämmwirkung von zwei Motorlagern mit Gummi-Ringkernfedern als Funktion der Frequenz in Hz aufgetragen. Die Kennlinie I wird an einem herkömmlichen Lochgummi-Ringkernfederlager gemessen, während die Kennlinie II für ein Motorlager gleicher Konstruktion erhalten wird, das mit einer Ringkernfeder der in Fig. 2 gezeigten Art ausgestattet ist. Die Ringkernfeder, mit der die Kennlinie I aufgenommen ist, ist ein zylindrischer Körper, der der in Fig. 2 gezeigten Ringkernfeder entspricht, jedoch keinen Einschnürungsabschnitt 8 aufweist.

Deutlich zeigt die Kennlinie I das Auftreten der Resonanz bei wenig oberhalb 300 Hz mit dem abschließenden Zusammenbruch der Dämmwirkung. Demgegenüber ist durch das einfache Vorsehen des Einschnürungsabschnittes 8 in dem sonst identischen Gummifederkörper das Auftreten der Resonanz bis auf über 550 Hz verschoben, wobei in diesem Bereich der oberen Lagerrauhigkeit eine Dämmwirkung erhalten bleibt, die um den Faktor 4 bis 5 größer ist als bei dem ansonsten baugleichen zylindrischen Ringkernfederlager nach dem Stand der Technik (Kennlinie I).

In diesem Zusammenhang ist besonders zu beachten, daß der Fachmann für den im einzelnen abzustimmenden Anwendungsfall anhand weniger geläufiger Versuche durch eine Modifikation sowohl der Kontur als auch der Abmessung des Einschnürungsabschnittes 8 die Lage der Resonanz sowohl zu höheren als auch zu tieferen Frequenzen verschieben kann.

Die beiliegende Zusammenfassung ist als Bestandteil der ursprünglichen Offenbarung anzusehen.

## Patentansprüche

1. Verwendung eines Ringkernfeder aus einem Federkern aus gummielastischem Werkstoff in Form eines rotationssymmetrischen und in der Umhüllenden zumindest angenähert zylindrischen Körpers, ausgelegt für eine dynamische Kompressionsbelastung in Richtung der Rotationssymmetrieachse über jeweils einen stirnseitig vollflächig angekoppelten oder angebundenen Auflageranschluss und einen gegenüberliegend stirnseitig vollflächig angekoppelten oder angebundenen Widerlageranschluss, mit einer einseitig geschlossenen oder beidseitig offenen zentralen Bohrung koaxial zur Rotationssymmetrieachse und mit einem zwischen Auflageranscnluss und Widerlageranschluss im Federkern ausgebildeten sich axial erstreckenden Einschnürungsabschnitt, in dem der Federkern einen verminderten Durchmesser aufweist, dessen kleinster Durchmesser kleiner als der Durchmesser zumindest des Auflageranschlusses oder des Widerlageranschlusses ist, wobei die axiale Höhe des Einschnürungsabschnittes gleich der oder grösser als 30% der Gesamthöhe des Federkerns ist, als Motorlager im Kraftfahrzeugbau.

2. Verwendung nach Anspruch 1,
dadurch **gekennzeichnet**,
dass der kleinste Durchmesser des Federkerns im Einschnürungsabschnitt kleiner ist als der Durchmesser sowohl des Auflageranschlusses als auch des Widerlageranschlusses.

3. Verwendung nach einem der Ansprüche 1 oder 2,
dadurch **gekennzeichnet**,
dass die axiale Höhe des Einschnürungsabschnittes gleich der oder grösser als die halbe Gesamthöhe des Federkerns ist.

4. Verwendung nach einem der Ansprüche 1 bis 3,
dadurch **gekennzeichnet**,
dass die axiale Höhe des Einschnürungsabschnittes zumindest im wesentlichen gleich der Gesamthöhe des Federkerns ist.

5. Verwendung nach einem der Ansprüche 1 bis 4,
dadurch **gekennzeichnet**,
dass das Axialprofil des Einschnürungsabschnittes stetig verläuft, insbesondere die Raumfläche der Einschnürung konkav toroid, paraboloid oder hyperboloid konfiguriert ist.

6. Verwendung nach einem der Ansprüche 1 bis 5,
dadurch **gekennzeichnet**,
dass der kleinste Durchmesser des Einschnürungsabschnittes zumindest im wesentlichen auf halber axialer Gesamthöhe des Federkerns liegt.

7. Verwendung nach einem der Ansprüche 1 bis 6,
dadurch **gekennzeichnet**,
dass der Federkern ein Lochgummikörper ist, insbesondere ein mit Hohlkanälen oder ein mit Hohlräume durchsetzenden Hohlkanälen durchsetzter Lochgummifederkörper ist.

## Claims

1. Use of a single-aperture core spring comprising a spring core of elastomeric material in the form an axially symmetrical member having an at least approximately cylindrical envelope and designed for dynamic compressive loading in the direction of the axis of axial symmetry via at least one bearing connection coupled or bonded to the entire surface of one end and an abutment connection coupled or bonded to the entire surface of the opposite end, formed with a central bore closed at one end or open at both ends and coaxial with the axis of axial symmetry and comprising an axially extending constricted portion formed between the bearing connection and the abutment connection and in which the spring core has a reduced diameter, the smallest diameter thereof being less than the diameter of at least the bearing connection or the abutment connection, wherein the axial height of the constricted portion is equal to or greater than 30% of the total height of the spring core, the device being of use as an engine bearing in motor vehicle construction.

2. Use according to claim 1, characterised in that the smallest diameter of the spring core in the constricted portion is less than the diameter of either the bearing connection or the abutment connection.

3. Use according to claim 1 or 2, characterised in that the axial height of the constricted region is equal to or greater than half the total height of the spring core.

4. Use according to any of claims 1 to 3,
characterised in that the axial height of the constricted portion is at least substantially equal to the total height of the spring core.

5. Use according to any of claims 1 to 4,
characterised in that the axial profile of the constricted region varies in uniform manner, more particularly the surface in three dimensions of the constriction is in the shape of a concave toroid, paraboloid or hyperboloid.

6. Use according to any of claims 1 to 5,
characterised in that the smallest diameter of the constricted region is at least substantially half way up the total axial height of the spring core.

7. Use according to any of claims 1 to 6,
characterised in that the spring core is a perforated rubber member, more particularly a perforated rubber spring member formed with ducts, or with ducts extending through cavities.

## Revendications

1. Utilisation d'un ressort à noyau annulaire constitué d'un noyau formant ressort en matériau en caoutchouc élastique, sous la forme d'un corps symétrique de révolution et au moins sensiblement cylindrique en ce qui concerne son enveloppe, prévu pour être soumis à une compression dynamique dans la direction de l'axe de symétrie de révolution par l'intermédiaire, à la fois, d'un raccordement d'appui accouplé ou raccordé, en bout, sur toute sa surface et d'un raccordement de contre-appui accouplé ou raccordé, en bout, sur toute sa surface, comportant un alésage central, fermé d'un côté ou ouvert des deux côtés, coaxial avec l'axe de symétrie de révolution, et comportant une partie en étranglement s'étendant axialement et réalisée, dans le noyau de ressort, entre le raccordement d'appui et le raccordement de contre-appui, dans laquelle partie en étranglement le noyau de ressort présente un diamètre réduit, dont le plus petit diamètre est plus petit que le diamètre au moins du raccordement d'appui ou du raccordement de contre-appui, la hauteur axiale de la partie en étranglement étant égale ou supérieure à 30 % de la hauteur totale du noyau de ressort, en tant qu'appui de moteur en construction automobile.

2. Utilisation suivant la revendication 1, caractérisée en ce que le plus petit diamètre du noyau de ressort, dans la partie en étranglement, est plus petit aussi bien que le diamètre du raccordement d'appui que le diamètre du raccordement de contre-appui.

3. Utilisation suivant la revendication 1 ou la revendication 2, caractérisée en ce que la hauteur axiale de la partie en étranglement est égale ou supérieure à la moitié de la hauteur totale du noyau de ressort.

4. Utilisation suivant l'une des revendication 1 à 3, caractérisée en ce que la hauteur axiale de la partie en étranglement est essentiellement au moins égale à la moitié de la hauteur totale du noyau de ressort.

5. Utilisation suivant l'une des revendication 1 à 4, caractérisée en ce que le profil axial de la partie en étranglement présente un tracé continu, en particulier en ce que la surface dans l'espace du rétrécissement à une configuration concave toroïdale, paraboloïdale ou hyperboloïdale.

6. Utilisation suivant l'une des revendication 1 à 5, caractérisée en ce que le plus petit diamètre de la partie en étranglement se trouve, au moins approximativement, au milieu de la hauteur totale du noyau de ressort.

7. Utilisation suivant l'une des revendication 1 à 6, caractérisée en ce que le noyau de ressort est un corps en caoutchouc à perforations, en particulier un corps en caoutchouc à perforations, traversé par des canaux creux ou par des canaux creux traversant des volumes creux.
